## Europäisches Patentamt
## European Patent Office
## Office européen des brevets

(19)

(11) Numéro de publication: **0 068 935**
**B1**

(12) # FASCICULE DE BREVET EUROPEEN

(45) Date de publication du fascicule du brevet:
**27.12.85**

(51) Int. Cl.⁴: **B 42 D 1/00**, G 09 B 19/08

(21) Numéro de dépôt: **82401009.4**

(22) Date de dépôt: **03.06.82**

(54) **Pochette formant lexique et présentoir.**

(30) Priorité: **05.06.81 FR 8111197**

(43) Date de publication de la demande:
**05.01.83 Bulletin 83/1**

(45) Mention de la délivrance du brevet:
**27.12.85 Bulletin 85/52**

(84) Etats contractants désignés:
**AT BE CH DE GB IT LI LU NL SE**

(56) Documents cités:
**FR - A - 1 582 801**
**FR - A - 2 459 518**
**US - A - 2 161 015**
**US - A - 3 052 043**
**US - A - 3 871 115**

(73) Titulaire: **Meirovitz, Mordechai, 71 Avenue des Ternes,
F-75017 Paris (FR)**

(72) Inventeur: **Meirovitz, Mordechai, 71 Avenue des Ternes,
F-75017 Paris (FR)**

(74) Mandataire: **Madeuf, Claude Alexandre Jean et al,
CABINET MADEUF 3, avenue Bugeaud, F-75116 Paris
(FR)**

**Description**

La présente invention concerne un nouvel objet qui se présente sous la forme d'une pochette, ce qui permet de la conserver en permanence sur soi.

Comme cela est connu, il est souvent très difficile lorsqu'on se trouve à l'étranger, particulièrement dans des pays à langue peu usitée ou très difficile de se faire comprendre ou de comprendre un interlocuteur et cela pour l'accomplissement de fonctions simples telles que demander son chemin, faire comprendre dans un magasin que l'on désire acheter des chaussures d'une pointure déterminée, etc.

La technique antérieure a fait connaître des moyens permettant de résoudre partiellement ce problème. C'est le cas du FR-A-1 582 801 qui décrit une pochette comportant trois volets articulés pour le support de plusieurs lexiques montés de façon amovible pour pouvoir être rapprochés les uns des autres et faire coïncider des mots ou expressions de deux langues distinctes. C'est le cas aussi du US-A-3 871 115 qui comporte une reliure pour deux lexiques à onglets et un memento présentant des dessins. Dans cette réalisation, seuls les mots et expressions de deux langues peuvent être comparés.

Jusqu'à présent, il n'a pas été proposé de lexiques utilisables dans n'importe quel pays et cela même sans en connaître la prononciation ni mêmes les caractères d'écriture. Il n'a pas non plus été proposé de lexiques pouvant être édités de façon identique quel que soit le pays dans lequel il est vendu.

L'invention résout ce problème au moyen d'une pochette formant lexique qui rend possible d'établir des échanges nombreux et cela dans un grand nombre de langues différentes.

Conformément à l'invention, la pochette formant lexique à langues multiples et à plusieurs volets articulés se recouvrant et contenant des lexiques amovibles en langues différentes est caractérisée en ce que l'un des volets supporte de façon amovible deux lexiques de langues différentes et un memento à signes graphiques dont les signes correspondent à ceux des lexiques amovibles, un autre volet au moins supportant de façon amovible des lexiques en attente.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une perspective de la pochette formant lexique dans une position faisant apparaître des panneaux présentoirs qu'elle comporte.

La fig. 2 est une perspective de la même pochette en position ouverte et faisant apparaître une série de lexiques.

La fig. 3 est une perspective partielle d'un lexique à feuillets multiples apparaissant dans une position entrouverte.

La pochette formant lexique représentée au dessin comporte par exemple trois volets 1, 2 et 3 de forme rectangulaire dont les dimensions respective correspondent sensiblement à celles d'un agenda ou d'une pochette pour chèques de voyage, afin qu'elle puisse facilement être mise en place dans une poche de veste ou dans un sac à main. Les volets 1, 2, 3 sont articulés entre eux en 4 et 5 pour pouvoir être repliés les uns contre les autres, le volet 1 venant par exemple contre le volet 2 et le volet 3 formant couverture.

La face interne des volets 1 et 2 comporte sur toute son étendue des goussets 6 et 7. Les goussets 6 et 7 constituent des éléments d'accrochage destinés à contenir le dernier feuillet 8 de lexiques 9. Chaque lexique 9 comporte, outre un feuillet 8 à engager dans le gousset, des feuillets superposés 10 de longueur progressivement croissante depuis le dessus jusqu'à la partie basse afin de laisser libre sur chacun d'eux un onglet 10a.

Les différents lexiques 9 comportent tous le même libellé sur chacun de leurs feuillets mais dans des langues différentes. Par exemple, le lexique 9a peut être en espagnol, le lexique 9b en arabe, le lexique 9c en japonais, le lexique 9d en allemand, etc.

Les lexiques disposés sur le volet 2 sont des lexiques dits »en attente«.

Le volet 1 supporte de façon analogue à ce qui vient d'être décrit deux lexiques $9_1$ et $9_2$. Le lexique $9_1$ est celui correspond à la langue maternelle du possesseur de la pochette ou à une langue avec laquelle il est familier, tandis que le lexique $9_2$ est constitué par un lexique dont la langue est celle du pays dans lequel se trouve le possesseur de la pochette ou la langue qui est la langue maternelle ou la langue familière d'un interlocuteur.

Le gousset 7 sert, en outre, au support d'un mémento graphique 11 qui est constitué d'une manière analogue au lexique 9 au moyen de feuillets superposés 12 laissant libre un onglet. Chaque feuillet du mémento graphique 11 fait apparaître des dessins stylisés 13 qui sont en rapport avec l'énoncé des mots, des expressions ou des phrases se trouvant sur la page correspondante des lexiques $9_1$ et $9_2$.

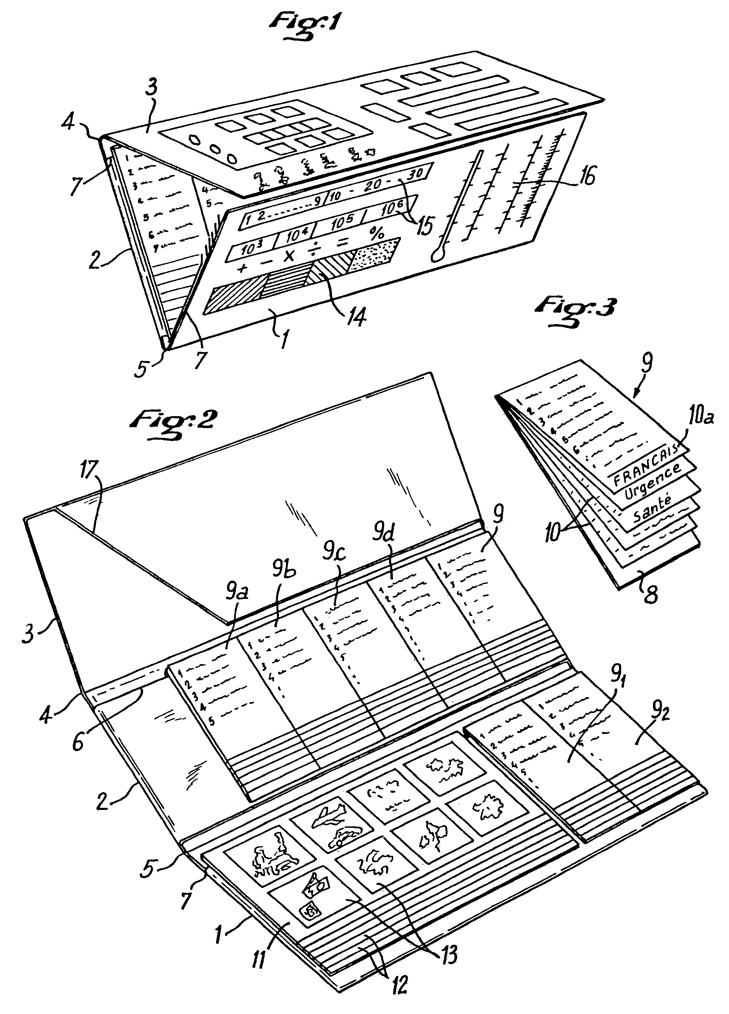

Comme l'illustre la fig. 3 qui fait apparaître schématiquement le lexique en langue française, le premier feuillet marqué »français« comporte tout d'abord des informations d'ordre très général, telles que l'interrogation »parlez-vous?« ..., »oui«, »non«, »je veux«, »combien«, »bon«, »mauvais«, etc.

Le second feuillet traite ensuite d'un sujet bien particulier tel que des sujets d'urgence et, à cette fin, l'onglet fait par exemple apparaître le mot »urgence«.

Le troisième feuille est relatif à un autre sujet, par exemple il est relatif à la santé, etc.

Les explications qui précèdent montrent qu'un renseignement peut ainsi être demandé facilement. En effet, un citoyen français se trouvant par exemple en Finlande dispose en $9_1$ le lexique en français et en $9_2$ le lexique en finlandais. Il peut ainsi poser des questions dans cette langue à un interlocuteur. Si, pour une raison quelconque, il n'est pas compris de son interlocuteur, il peut également présenter le dessin qui correspond approximativement à la question à poser, ce qui peut permettre à l'interlocuteur de se référer au lexique finlandais et donc au citoyen français de comprendre la réponse ou l'interrogation en se référant à la ligne du lexique français qui correspond à celle du lexique finlandais.

Les lexiques en attente peuvent être utilisés notamment lors de congrès ou réunions divers dans lesquels une personne d'une nationalité quelconque est amenée à recontrer successivement des personnes d'autres nationalités. Dans ce cas, il suffit de remplacer le lexique $9_2$ qui était considéré ci-dessus, le lexique finlandais, par un lexique de la langue appropriée.

Outre les informations décrites ci-dessus, la pochette comporte sur ses faces libres des ensembles de signaux graphiques permettant également d'établir des liens de communication avec des interlocuteurs. Par exemple, il peut être prévu une bande de panneaux de couleurs différentes désignés par 14, des panneaux 15 comportant les chiffres de 1 à 9 ou 10, un autre les nombres 10, 20, 30, etc., et en dessous des signes mathématiques courants par exemple + − : = %, ce qui permet à deux interlocuteurs d'échanger des données numériques avec une grande facilité. De même, des échelles de correspondance 16 tant de températures que de longueur avec d'autres mesures peuvent être prévures. L'une des faces ou une partie de l'une des faces d'un panneau peut être réservée pour y disposer un ou plusieurs encarts publicitaires.

Finalement, l'un des panneaux peut présenter, à l'intérieur comme illustré par le panneau 3, une poche 17 pour la mise en place d'un billet d'avion, d'un carnet de chèques de voyage, etc.

L'invention n'est pas limitée à l'exemple de réalisation représenté et décrit en détail, car diverses modifications peuvent y être apportées sans sortir de son cadre. En particulier, les goussets de fixation des lexiques peuvent être remplacés par d'autres moyens permettant une fixation amovible, par exemple l'un des volets peut comporter une bande de retenue magnétique à fil, du type Velcro, auto-collant, etc., et le dos des lexiques un organe complémentaire.

## Revendications

1. Pochette formant lexique à langues multiples et à plusieurs volets articulés se recouvrant et contenant des lexiques amovibles de langues différentes, caractérisée en ce que l'un des volets supporte de façon amovible deux lexiques de langues différentes ($9_1$, $9_2$) et un memento à signes graphiques (11) dont les signes correspondent à ceux des lexiques amovibles, un autre volet (2) au moins supportant de façon amovible des lexiques en attente.

2. Pochette suivant la revendication 1, caractérisée en ce que les lexiques et le memento du volet (1) sont à feuillets multiples et comportent des onglets similaires faisant apparaître des sujets différents mais correspondant entre eux.

3. Pochette suivant l'une des revendications 1 ou 2, caractérisée en ce qu'elle comporte trois volets (1, 2, 3) articulés ensemble pour que le volet médian (2) soit recouvert par les deux volets extrêmes (1 et 3).

4. Pochette suivant l'une des revendications 1 à 3, caractérisée en ce que les lexiques en attente (9a, 9b . . .) sont supportés par le volet médian (2).

5. Pochette suivant l'une des revendications 1 à 4, caractérisée en ce que les volets comportant des lexiques sont reliés à ceux-ci par un gousset, des éléments magnétiques, des éléments d'accrochage, des éléments auto-collants ou analogues.

6. Pochette suivant l'une des revendications 1 à 5, caractérisée en ce que les faces des volets ne comportant pas de lexiques amovibles font apparaître des éléments graphiques de compréhension internationale ainsi que des échelles de correspondance d'unités de mesures diverses.

7. Pochette suivant l'une des revendications 1 à 6, caractérisée en ce qu'elle comporte, de plus, au moins un emplacement pour un encart publicitaire.

8. Pochette suivant l'une des revendications 1 à 7, caractérisée en ce qu'elle comporte, supplémentairement, au moins une poche pour le rangement d'objets du genre billets d'avion, chèques de voyage, etc.

## Patentansprüche

1. Faltblatt, das als vielsprachiges Lexikon ausgebildet ist und aus mehreren miteinander gelenkig verbundenen, sich gegenseitig überdekkenden Klappen besteht, die jeweils abnehmbare Wörterbücher von verschiedenen Sprachen enthalten, dadurch gekennzeichnet, daß eine Klappe zwei abnehmbar eingesetzte Wörterbücher ($9_1$, $9_2$) in verschiedenen Sprachen und einen ebenfalls abnehmbar eingesetzten, mit graphischen Zeichen versehenen Denkzettel (11) trägt, dessen Zeichen den Zeichen der abnehmbaren Wörterbücher entsprechen, wobei eine andere Klappe (2) abnehmbare eingesetzte Reserve-Wörterbücher trägt.

2. Faltblatt nach Anspruch 1, dadurch gekennzeichnet, daß die Wörterbücher und der Denkzettel, die in der Klappe (1) eingesetzt sind, mehrere Blätter enthalten und gleich geformte Kartonblätter aufweisen, die verschiedene, jedoch zusammenhängende Sprachgebiete bezeichnen.

3. Faltblatt nach einem der Ansprüche 1 oder 2, dadurch gekennzeichnet, daß es drei Klappen (1, 2, 3) aufweist, die so miteinander gelenkig verbunden sind, daß die Mittelklappe (2) durch die beiden Außenklappen (1, 3) überdeckt wird.

4. Faltblatt nach einem der Ansprüche 1 bis 3, dadurch gekennzeichnet, daß die Reservewörterbücher (9a, 9b) durch die Mittelklappe (2) getragen werden.

5. Faltblatt nach einem der Ansprüche 1 bis 4, dadurch gekennzeichnet, daß die Klappen, die Wörterbücher aufweisen, mit diesen durch eine Tasche, magnetische Elemente, hakenförmige Stücke, selbstklebende Elemente oder ähnliche Einrichtungen verbunden sind.

6. Faltblatt nach einem der Ansprüche 1 bis 5, dadurch gekennzeichnet, daß die Klappenseiten, die keine abnehmbaren Wörterbücher aufweisen, international begreifliche graphische Elemente und Umsetzungstabellen von verschiedenen Maßeinheiten aufzeigen.

7. Faltblatt nach einem der Ansprüche 1 bis 6, dadurch gekennzeichnet, daß es zusätzlich eine Stelle für einen Reklamezettel aufweist.

8. Faltblatt nach einem der Ansprüche 1 bis 7, dadurch gekennzeichnet, daß es zusätzlich mindestens eine Tasche für solche Gegenstände wie Flugfahrkarten, Reiseschecks usw. aufweist.

**Claims**

1. Lexicon forming folder for multiple languages and with a plurality of overlapping articulated flaps containing removable lexicons of different languages, characterized in that one of the flaps removably supports two lexicons in different languages ($9_1$, $9_2$) and a memento with graphic signs (11) the signs of which correspond to those of the removable lexicons, another flap (2) at least removably supporting lexicons in reserve.

2. Folder according to claim 1, characterized in that the lexicons and the memento of the flap (1) are with multiple leaves and comprise similar strips for showing different matters corresponding together.

3. Folder according to one of claims 1 or 2, characterized in that it comprises three flaps (1, 2, 3) which are articulated together so that the median flap (2) is covered by the two end flaps (1 and 3).

4. Folder according to one of claims 1 to 3, characterized in that the lexicons in reserve (9a, 9b . . .) are supported by the median flap (2).

5. Folder according to one of claims 1 to 4, characterized in that the flaps comprising the lexicons are connected to the latter by a gusset, magnetic elements, hooking elements, self adhesive elements or similar.

6. Folder according to one of claims 1 to 5, characterized in that the faces of the flaps which do not comprise removable lexicons show graphic elements of international understanding as well as scales for correspondence of various measuring units.

7. Folder according to one of claims 1 to 6, characterized in that it further comprises at least one location for an advertizing insert.

8. Folder according to one of claims 1 to 7, characterized in that it further comprises at least one pocket for storing articles taken amoung air tickets, travellers checks, etc.

Fig.1

Fig.2

Fig.3